(19) Europäisches Patentamt
European Patent Office
Office européen des brevets

(11) **EP 4 508 621 B1**

(12) **EUROPÄISCHE PATENTSCHRIFT**

(45) Veröffentlichungstag und Bekanntmachung des Hinweises auf die Patenterteilung:
**15.10.2025 Patentblatt 2025/42**

(21) Anmeldenummer: **23735621.7**

(22) Anmeldetag: **21.06.2023**

(51) Internationale Patentklassifikation (IPC):
*G08G 1/01* (2006.01)       *G09B 9/05* (2006.01)
*G06N 3/02* (2006.01)       *G06N 3/04* (2023.01)

(52) Gemeinsame Patentklassifikation (CPC):
**G08G 1/0129; G06N 3/04; G08G 1/0145**

(86) Internationale Anmeldenummer:
**PCT/EP2023/066809**

(87) Internationale Veröffentlichungsnummer:
**WO 2024/008453 (11.01.2024 Gazette 2024/02)**

(54) **VERFAHREN ZUR PRÄDIKTION EINES EINFLUSSES EINES VERKEHRSTEILNEHMERS AUF ZUMINDEST EINEN ANDEREN VERKEHRSTEILNEHMER UND VERFAHREN ZUM BETRIEB EINES FAHRZEUGS**

METHOD FOR PREDICTING AN INFLUENCE OF ONE ROAD USER ON AT LEAST ONE OTHER ROAD USER, AND METHOD FOR OPERATING A VEHICLE

PROCÉDÉ DE PRÉDICTION D'UNE INFLUENCE D'UN USAGER DE LA ROUTE SUR AU MOINS UN AUTRE USAGER DE LA ROUTE, ET PROCÉDÉ DE FONCTIONNEMENT D'UN VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **05.07.2022 DE 102022002457**

(43) Veröffentlichungstag der Anmeldung:
**19.02.2025 Patentblatt 2025/08**

(73) Patentinhaber: **Mercedes-Benz Group AG 70372 Stuttgart (DE)**

(72) Erfinder: **MONNINGER, Thomas Menlo Park, 94025 (US)**

(74) Vertreter: **Novagraaf Group Chemin de l'Echo 3 1213 Onex / Geneva (CH)**

(56) Entgegenhaltungen:
**EP-A1- 3 722 908        DE-A1- 102019 206 908
DE-A1- 102019 209 736**

**Beschreibung**

Die Erfindung betrifft ein Verfahren zur Prädiktion eines Einflusses eines Verkehrsteilnehmers auf zumindest einen anderen Verkehrsteilnehmer.

Die Erfindung betrifft weiterhin ein Verfahren zum Betrieb eines Fahrzeugs.

Die DE 10 2021 005 625.6 beschreibt ein Verfahren zur Trajektorienprädiktion von Fahrzeugen in einer Umgebung eines Ego-Fahrzeugs mittels eines trainierten künstlichen neuronalen Netzes. Dabei werden mittels eines maschinell trainierten aufmerksamkeitsbasierten Interaktionsalgorithmus Interaktionsgrade zwischen den Fahrzeugen ermittelt. Mittels des Interaktionsalgorithmus werden einzelne Fahrzeuge aus der Menge der in der Umgebung des Ego-Fahrzeugs befindlichen Fahrzeuge als relevant für die Trajektorienprädiktion identifiziert und für diese ausgewählt, wenn deren jeweiliger Interaktionsgrad mit zumindest einem der Fahrzeuge, dessen Trajektorie prädiziert werden soll, einen vorgegebenen Grenzwert überschreitet. In einem darauffolgenden Lernschritt wird ein Trajektorienprädiktionsalgorithmus ausschließlich mit den als relevant für die Trajektorienprädiktion ausgewählten Fahrzeugen trainiert und die mittels des Trajektorienprädiktionsalgorithmus ausgeführte Trajektorienprädiktion wird ausschließlich für die als relevant für die Trajektorienprädiktion ausgewählten Fahrzeugen durchgeführt. Weiterhin wird ein Verfahren zum automatisierten Betrieb eines Ego-Fahrzeugs beschrieben, wobei Trajektorien von Fahrzeugen in einer Umgebung eines Ego-Fahrzeugs prädiziert werden und die prädizierten Trajektorien in dem automatisierten Betrieb des Ego-Fahrzeugs bei einer automatisierten Quer- und/oder Längssteuerung des Ego-Fahrzeugs berücksichtigt werden.

Weiterhin beschreibt die DE 10 2019 206 908 A1 ein Verfahren zum Trainieren eines Algorithmus für ein Steuergerät eines Kraftfahrzeugs, wobei das Steuergerät zur Umsetzung einer automatisierten Fahrfunktion unter Eingriff in Aggregate des Kraftfahrzeugs auf der Grundlage von Eingangsdaten unter Verwendung des Algorithmus vorgesehen ist. Der Algorithmus wird durch ein selbstlernendes neuronales Netz trainiert. Das Verfahren umfasst folgende Schritte:

- Bereitstellen eines Computerprogrammproduktmoduls für die automatisierte autonome Fahrfunktion, wobei das Computerprogrammproduktmodul den zu trainierenden Algorithmus und das selbstlernende neuronale Netz enthält,
- Einbetten des trainierten Computerprogrammproduktmoduls in das Steuergerät des Kraftfahrzeugs,
- Fahren des Kraftfahrzeugs in einer real existierenden Verkehrsumgebung durch einen menschlichen Fahrer, wobei die Fahrt eine gefahrene Trajektorie bestimmt,
- Zuführen von Daten einer Umgebungssensorik und einer Kraftfahrzeugsensorik zu dem Steuergerät und Berechnen einer virtuellen Trajektorie durch den Algorithmus,
- Ableiten einer Metrik aus einem Vergleich der gefahrenen Trajektorie und der virtuellen Trajektorie sowie Speichern der Daten der Umgebungssensorik und der Kraftfahrzeugsensorik in einem Speicher, wenn für eine Verkehrssituation bestimmte Metrikkriterien erfüllt sind,
- Zurverfügungstellen von Informationen betreffend die Verkehrssituation an eine Verkehrssimulation,
- Analyse der Verkehrssituation durch die Verkehrssimulation, wobei anhand der Kartendaten, der Umgebungssensorik und der Kraftfahrzeugsensorik ein virtuelles Abbild der Verkehrssituation erstellt wird, wobei mittels der Verkehrssimulation die Daten der Verkehrssituation variiert werden,
- Trainieren des Algorithmus durch die Variation der Verkehrssituation.

Die EP 3 722 908 A1 beschreibt ein Verfahren zum Bestimmen eines Computermodells eines realistischen Fahrverhaltens, wobei das Verfahren umfasst:

- Bereitstellen von Sensordaten beobachteter Fahrzeuge innerhalb eines Verkehrsbereichs unter Verwendung eines oder mehrerer Umgebungssensoren;
- Extrahieren beobachteter Daten zum Fahrzeugverhalten aus den Sensordaten;
- Extrahieren von Fahrverhaltenstrainingsdaten aus beobachteten Fahrzeugverhaltensdaten von Fahrzeugen, die innerhalb des Verkehrsbereichs miteinander interagieren;
- Anpassen von Fahrverhaltensmodellparametern eines auf maschinellem Lernen basierenden Fahrverhaltenssimulators durch Reduzieren einer Abweichung zwischen den Fahrverhaltenstrainingsdaten und simulierten Fahrzeugverhaltensdaten, die von dem auf maschinellem Lernen basierenden Fahrverhaltenssimulator erzeugt werden.

Die DE 10 2019 209 736 A1 beschreibt ein Verfahren zur Bewertung möglicher Trajektorien von Verkehrsteilnehmern einer Verkehrsumgebung mit den Schritten:

- Erfassen der Verkehrsumgebung mit statischen und dynamischen Merkmalen;
- Identifizieren eines Verkehrsteilnehmers;
- Ermitteln einer möglichen Trajektorie (S3) für den Verkehrsteilnehmer der Verkehrsumgebung;
- Bewerten der ermittelten möglichen Trajektorie für den Verkehrsteilnehmer mittels eines adaptierten oder trainierten Empfehlungsdienstes und der erfassten Verkehrsumgebung.

Der Erfindung liegt die Aufgabe zu Grunde, ein neuartiges Verfahren zur Prädiktion eines Einflusses eines Verkehrsteilnehmers auf zumindest einen anderen Verkehrsteilnehmer und ein neuartiges Verfahren zum Betrieb eines Fahrzeugs anzugeben.

Die Aufgabe wird erfindungsgemäß gelöst durch ein Verfahren zur Prädiktion eines Einflusses eines Verkehrsteilnehmers auf zumindest einen anderen Verkehrsteilnehmer, welches die im Anspruch 1 angegeben Merkmale aufweist, und durch ein Verfahren zum Betrieb eines Fahrzeugs, welches die im Anspruch 4 angegebenen Merkmale aufweist.

Vorteilhafte Ausgestaltungen der Erfindung sind Gegenstand der Unteransprüche.

In dem erfindungsgemäßen Verfahren zur Prädiktion eines Einflusses eines Verkehrsteilnehmers auf zumindest einen anderen Verkehrsteilnehmer durch Auswertung von Verkehrsszenarien mittels eines trainierten künstlichen neuronalen Netzes wird das Training des neuronalen Netzes mittels aufgezeichneter Verkehrsszenarien durchgeführt. Dabei weisen die Verkehrsszenarien mehrere Verkehrsteilnehmer auf und sind mit eine Beeinflussung eines Verkehrsteilnehmers durch andere Verkehrsteilnehmer repräsentierenden Score-Werten gelabelt. Eine Berechnung eines jeweiligen Score-Werts für einen Verkehrsteilnehmer bezüglich eines anderen Verkehrsteilnehmers wird basierend auf einer Ermittlung einer Abweichung zwischen zwei Trajektorien des einen Verkehrsteilnehmers durchgeführt, wobei die Abweichung zwischen den zwei Trajektorien in einem Vergleich von zwei Zeitreihen mittels eines Average Displacement Errors und/oder eines Final Displacement Errors ermittelt wird. Ein minimaler Average Displacement Error gibt dabei an, wie weit jede berechnete Position der jeweiligen Trajektorie von ihrer wahren Position im Mittel entfernt ist. Ein minimaler Final Displacement Error gibt dabei eine Abweichung einer Vorhersage von einer wahren Trajektorie für den jeweils letzten Vorhersageschritt an. Dabei ist eine der zwei Trajektorien eine erfasste reale Trajektorie, die der eine Verkehrsteilnehmer in einem jeweiligen aufgezeichneten Verkehrsszenario tatsächlich fährt. Die verbleibende der zwei Trajektorien ist eine simulierte Trajektorie, welche in einer Simulation ermittelt wird und eine Trajektorie repräsentiert, welche der eine Verkehrsteilnehmer im gleichen Verkehrsszenario fahren würde, wenn der andere Verkehrsteilnehmer nicht vorhanden wäre, wobei in der Simulation ein Modul zur Trajektorienplanung das gleiche Verkehrsszenario erneut abfährt, mit dem Unterschied, dass der andere Verkehrsteilnehmer fehlt. Dabei werden die Score-Werte als Label in dem trainierten künstlichen neuronalen Netz verwendet, um den Einfluss eines Verkehrsteilnehmers auf zumindest einen anderen Verkehrsteilnehmer zu prädizieren. Das trainierte künstliche neuronale Netz vewendet einen Map-Free-Ansatz, welcher dynamische Informationen der anderen Verkehrsteilnehmer als Eingangsinformationen nutzt, und/oder einen Szenengraph, welcher als Eingangsinformationen statische Informationen, die dynamischen Informationen, semantische Informationen und relationale Informationen in eine Graphenstruktur überführt. Ausgangsinformationen des trainierten künstlichen neuronalen Netzes geben Auskunft über den Einfluss eines Verkehrsteilnehmers auf zumindest einen weiteren Verkehrsteilnehmer.

Für ein automatisiert betriebenes Ego-Fahrzeug nach Level 2 bis 5 der Norm SAE J3016 sowie aktive Kollisionsvermeidungssysteme nach NCAP ist eine präzise Erkennung von Verkehrsteilnehmern in der Umgebung des Ego-Fahrzeugs erforderlich. Um eine sichere und kollisionsfreie Trajektorie für das Ego-Fahrzeug zu planen, müssen zukünftige Trajektorien umliegender Verkehrsteilnehmer zusätzlich korrekt prädiziert werden. Hierbei ist ein inhärentes Verständnis eines Einflusses jedes Verkehrsteilnehmers auf andere Verkehrsteilnehmer erforderlich, um Interaktions-Abhängigkeiten zu berücksichtigen.

Um diese Interaktionen zu quantifizieren, wird mittels des vorliegenden Verfahrens eine skalare Einflussmetrik in Form des Score-Werts sowie ein Verfahren zum Lernen dieser Einflussmetrik geschaffen.

Das Verfahren ermöglicht dabei in besonders vorteilhafter Weise eine explizite Formulierung eines Einfluss-Scores auf Ebene der Interaktion zwischen zumindest zwei Verkehrsteilnehmern. Hierbei ist eine Extrahierung des Score-Werts aus beliebigen Verkehrsszenarien möglich, so dass dieser als Label und/oder Ground-Truth genutzt werden kann. Insbesondere ermöglicht das Verfahren einen lernbasierten Ansatz, der die generierten Score-Werte als Label verwendet und basierend auf einer Konstellation umliegender Verkehrsteilnehmer und optional einer zugrundeliegenden Infrastruktur, wie beispielsweise Fahrspuren, Verkehrsregeln etc., die Prädiktion dieses Score-Werts im Live-Betrieb lernt.

In einer möglichen Ausgestaltung des Verfahrens wird aus dem Score-Wert eines Verkehrsteilnehmers ein Einfluss des Verkehrsteilnehmers auf genau einen anderen Verkehrsteilnehmer ermittelt. Das heißt, der Score-Wert wird als relative Größe betrachtet, um einen relativen Effekt eines Verkehrsteilnehmers auf einen weiteren spezifischen Verkehrsteilnehmer zu beschreiben.

In einer weiteren möglichen Ausgestaltung des Verfahrens wird aus dem Score-Wert eines Verkehrsteilnehmers ein Einfluss des Verkehrsteilnehmers auf alle anderen Verkehrsteilnehmer einer jeweiligen Verkehrsszene ermittelt. Das heißt, der Score-Wert wird als absolute Größe betrachtet und verwendet, um einen globalen Effekt eines Verkehrsteilnehmers auf das Verkehrsszenario zu beschreiben.

In dem Verfahren zum Betrieb eines Fahrzeugs wird erfindungsgemäß der in dem zuvor genannten Verfahren oder Ausgestaltungen desselben prädizierten Einflusses eines Verkehrsteilnehmers auf zumindest einen anderen Verkehrsteilnehmer zur Ausführung einer Fahrzeugfunktion verwendet. Hieraus resultiert ein besonders zuverlässiger Betrieb der Fahrzeugfunktion.

In einer möglichen Ausgestaltung des Verfahrens zum Betrieb des Fahrzeugs wird anhand des prädizierten Einflusses eines umliegenden Verkehrsteilnehmers zu einem Ego-Fahrzeug mittels eines Kollisionswarn- und/oder Kollisionsvermeidungssystems des Ego-Fahrzeugs eine Wahrscheinlichkeit eines Eintritts einer Kollision des Ego-Fahrzeugs mit dem umliegenden Verkehrsteilnehmer ermittelt. Diese Ermittlung ist aufgrund der Verwendung des prädizierten Einflusses besonders effizient und zuverlässig.

In einer weiteren möglichen Ausgestaltung des Verfahrens zum Betrieb des Fahrzeugs wird der prädizierte Einfluss als Heuristik verwendet, um einen Suchraum bei einer Pfadfindung eines automatisiert betriebenen Fahrzeugs auf zumindest einen relevanten Verkehrsteilnehmer zu beschränken. Dies ermöglicht einen besonders effizienten Betrieb der entsprechenden Fahrzeugfunktion.

In einer weiteren möglichen Ausgestaltung des Verfahrens zum Betrieb des Fahrzeugs wird der prädizierte Einfluss als Eingangsgröße eines Trajektorienprädiktionsansatzes verwendet und eine Stärke einer Interaktion zwischen Paaren von Verkehrsteilnehmern wird modelliert. Dies ermöglicht eine besonders genaue Prädiktion von Trajektorien.

Ausführungsbeispiele der Erfindung werden im Folgenden anhand von Zeichnungen näher erläutert.

Dabei zeigen:

Fig. 1    schematisch eine Draufsicht einer Verkehrssituation,

Fig. 2    schematisch eine Draufsicht einer weiteren Verkehrssituation,

Fig. 3    schematisch eine Draufsicht einer weiteren Verkehrssituation,

Fig. 4    schematisch Trajektorien eines Fahrzeugs aus den Verkehrssituationen gemäß den Figuren 2 und 3 und

Fig. 5    schematisch einen Aufbau einer Graphenstruktur sowie eine Verarbeitung in der Graphenstruktur vorhandener Informationen mit einem graphenbasierten künstlichen neuronalen Netz.

Einander entsprechende Teile sind in allen Figuren mit den gleichen Bezugszeichen versehen.

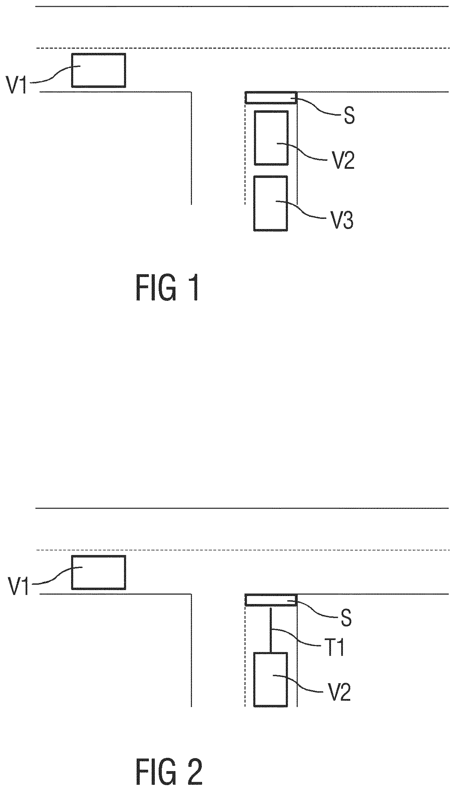

In Figur 1 ist eine Draufsicht einer Verkehrssituation an einer T-Kreuzung dargestellt. Dabei befindet sich der als Fahrzeug ausgebildete Verkehrsteilnehmer V1 auf einer Vorfahrtsstraße und zwei andere, ebenfalls als Fahrzeuge ausgebildete Verkehrsteilnehmer V2, V3 halten hintereinander an einer Stopplinie S. In diesem Fall ist ein Einfluss des Verkehrsteilnehmers V1 auf den Verkehrsteilnehmer V2 groß, da der Verkehrsteilnehmer V1 den Grund für das Halten des Verkehrsteilnehmers V2 bildet. Auch ist ein Einfluss des Verkehrsteilnehmers V2 auf den Verkehrsteilnehmer V3 groß, da der Verkehrsteilnehmer V3 ansonsten bis vor zur Stopplinie S fahren würde.

**Um Interaktionen** zwischen den Verkehrsteilnehmern V1 bis V3 zu quantifizieren, werden vorliegend eine Einflussmetrik, auch als Score-Wert bezeichnet, sowie ein Verfahren zum Lernen dieser Einflussmetrik zu Verfügung gestellt.

Für die Bestimmung des Einflusses von einem Verkehrsteilnehmer V1 bis V3 auf einen anderen Verkehrsteilnehmer V1 bis V3 wird eine Abweichung einer Trajektorie T1, T2 bestimmt, die der eine Verkehrsteilnehmer V1 bis V3 fahren würde, falls der andere Verkehrsteilnehmer V1 bis V3 unter Betrachtung nicht vorhanden wäre.

Wie Figur 2 zeigt, stoppt der Verkehrsteilnehmer V2 aufgrund des heranfahrenden Verkehrsteilnehmers V1 an der Stopplinie S unter Befahrung der Trajektorie T1.

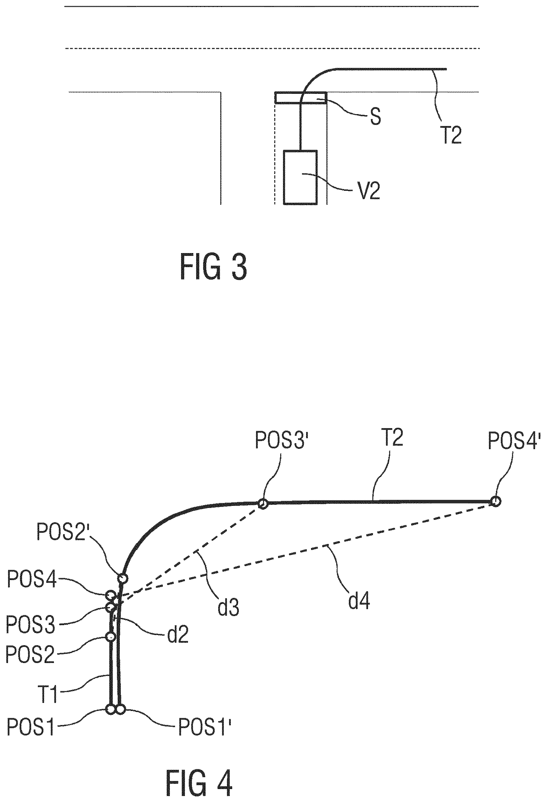

Um den Einfluss des Verkehrsteilnehmers V1 auf den Verkehrsteilnehmer V2 mittels dieser Einflussmetrik zu quantifizieren, ist in Figur 3 dieselbe Situation ohne den Verkehrsteilnehmer V1 gezeigt. Hier stoppt der Verkehrsteilnehmer V2 nicht an der Stopplinie S, sondern folgt der Trajektorie T2 und biegt rechts ab.

Die Abweichung zwischen den beiden Trajektorien T1, T2 ist dementsprechend groß und damit laut Einflussmetrik auch der Einfluss des Verkehrsteilnehmers V1 auf den Verkehrsteilnehmer V2. Dies ist plausibel, da der Verkehrsteilnehmer V2 tatsächlich mit dem Verkehrsteilnehmer V1 interagiert und erst dann fahren wird, wenn der Verkehrsteilnehmer V1 die Kreuzung passiert hat.

Die Einflussmetrik $e_{i,j}$ zur Bestimmung des Einflusses von einem Verkehrsteilnehmer i auf einen Verkehrsteilnehmer j wird anhand eines Distanzmaßes D auf eine Trajektorie t von j gegeben i und auf eine Trajektorie t von j gegeben nicht i gemäß

$$e_{i,j} = D\big(t_{j|i}, t_{j|\neg i}\big) \qquad (1)$$

berechnet.

Als Distanzmaße lassen sich alle Einflussmetriken verwenden, die zwei Zeitreihen vergleichen können, beispielsweise der so genannte Average Displacement Error (ADE) oder der so genannte Final Displacement Error (FDE) gemäß

$$D_{ADE} = \frac{1}{T}\sum_{i=1}^{T}\sqrt{(x_i^1 - x_i^2)^2 + (y_i^1 - y_i^2)^2} \qquad (2)$$

und

$$D_{FDE} = \sqrt{(x_T^1 - x_T^2)^2 + (y_T^1 - y_T^2)^2} \qquad (3)$$

Außerdem kann der Einfluss absolut oder relativ berechnet werden. Relativ beschreibt den Einfluss des Verkehrsteilnehmers i auf den Verkehrsteilnehmer j, absolut beschreibt den Einfluss von Verkehrsteilnehmer i auf alle umliegenden Verkehrsteilnehmer:

$$e_i = \sum_{j=1}^{N} e_{i,j} \qquad (4)$$

Wird die als Average Displacement Error ausgebildete Einflussmetrik auf das in den Figuren 2 und 3 dargestellte Verkehrsszenario angewendet, ergibt sich eine in Figur 4 dargestellte Situation mit den Trajektorien T1, T2 und Positionen POS1 bis POS4, POS1' bis POS4' der Trajektorien T1, T2 pro Sekunde.

Zwischen den einzelnen Positionen POS1 bis POS4, POS1' bis POS4' der Trajektorien T1, T2 sind Abweichungen d2 bis d4 ausgebildet, welche an der Position POS1, POS1' noch den Wert Null aufweisen, mit jeder weiteren Position POS2 bis POS4, POS2' bis POS4' wachsen. Dies liegt darin begründet, dass der Verkehrsteilnehmer V2 bei Befahrung der Trajektorie T1 an der Stopplinie S anhält und bei Befahrung der Trajektorie T2 rechts abbiegt.

Zur Berechnung des Einflusses sind also zwei Trajektorien T1, T2 des Verkehrsteilnehmers V2 erforderlich. Die eine Trajektorie T1 für den Fall, dass der Verkehrsteilnehmer V1 existiert, und die andere Trajektorie T2 für den Fall, dass der Verkehrsteilnehmer V1 nicht existiert.

Aufgezeichnete Daten enthalten dabei nur den Fall, dass der Verkehrsteilnehmer V1 existiert. Der andere Fall würde eine so genannte Intervention erfordern, also einen Eingriff in die Umgebung, welcher nachträglich nicht möglich ist. Vergleiche hierzu beispielsweise "Judea Pearl: Causality: Models, Reasoning, and Inference".

Um dennoch für diesen Fall eine Trajektorie T2 zu erhalten, wird das Verkehrsszenario neu simuliert und die Umgebung bis auf den Verkehrsteilnehmer V1 übernommen. Ein Modul zur Trajektorienplanung kann nun das gleiche Verkehrsszenario erneut abfahren, mit dem einen Unterschied, dass der Verkehrsteilnehmer V1 fehlt. So lässt sich eine Intervention in der Simulation realisieren.

Für aufgezeichnete Verkehrsszenarien lässt sich mit diesem Verfahren der Einfluss von jedem Verkehrsteilnehmer V1 bis V3 auf jeweils jeden anderen Verkehrsteilnehmer V1 bis V3 im Szenario quantifizieren. Dieser Score-Wert wird nun als Label in einem lernbasierten Verfahren verwendet, welches zum Ziel hat, den Einfluss zu prädizieren.

Dabei können beliebige Inputs genutzt werden. Beispielsweise kann ein so genannter Map-Free-Ansatz genutzt werden, der lediglich dynamische Informationen DI der umliegenden Verkehrsteilnehmer V1 bis V3 als Eingangsinformation verwendet.

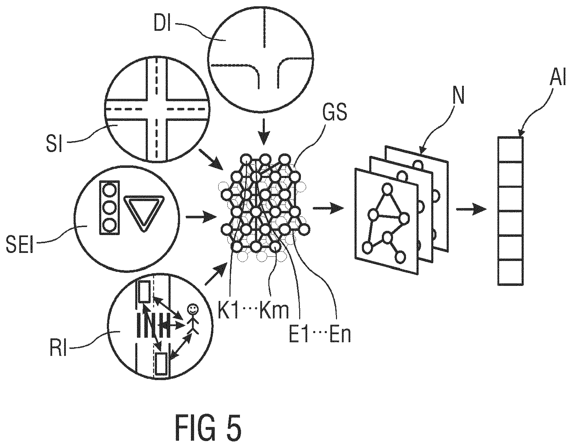

Es kann jedoch auch ein Szenengraph verwendet werden, welcher alle verfügbaren Informationen, einschließlich Informationen über eine statische Infrastruktur aus einer Karte, verwendet. Dies ist in Figur 5 anhand eines Aufbaus einer Graphenstruktur GS sowie einer Verarbeitung in der Graphenstruktur GS vorhandener Informationen mit einem graphenbasierten künstlichen neuronalen Netz N dargestellt. Die Graphenstruktur GS umfasst dabei mehrere Knoten K1 bis Km, welche von Kanten E1 bis En verbunden sind.

Dabei werden als Eingangsinformationen des Verkehrsszenarios statische Informationen SI, die dynamischen Informationen DI, semantische Informationen SEI und relationale Informationen RI in die Graphenstruktur GS überführt.

Anschließend wird eine Form eines lernbasierten Verfahrens, insbesondere das graphenbasierte künstliche neuronale Netz N verwendet, wobei Ausgangsinformationen AI Auskunft über den Einfluss eines Verkehrsteilnehmers V1 bis V3 auf zumindest einen weiteren Verkehrsteilnehmer V1 bis V3 geben.

Das lernbasierte Verfahren ermöglicht so die Prädizierung des Einflusses von einem Verkehrsteilnehmer V1 bis V3 auf einen anderen Verkehrsteilnehmer V1 bis V3. Diese Information kann in einem Kollisionswarner, für einen Trajektorienprädiktionsansatz oder für einen Trajektorienplanungsansatz verwendet werden.

**Patentansprüche**

1.  Verfahren zur Prädiktion eines Einflusses eines Verkehrsteilnehmers (V1 bis V3) auf zumindest einen anderen Verkehrsteilnehmer (V1 bis V3) durch Auswertung von Verkehrsszenarien mittels eines trainierten künstlichen neuronalen Netzes (N), wobei

    - das Training des neuronalen Netzes (N) mittels aufgezeichneter Verkehrsszenarien durchgeführt wird, wobei die Verkehrsszenarien mehrere Verkehrsteilnehmer (V1 bis V3) aufweisen und mit einer Beeinflussung eines Verkehrsteilnehmers (V1 bis V3) durch andere Verkehrsteilnehmer (V1 bis V3) repräsentierenden Score-Werten gelabelt sind,
    - eine Berechnung eines jeweiligen Score-Werts für einen Verkehrsteilnehmer (V1 bis V3) bezüglich eines anderen Verkehrsteilnehmers (V1 bis V3) basierend auf einer Ermittlung einer Abweichung (d2 bis d4) zwischen zwei Trajektorien (T1, T2) des einen Verkehrsteilnehmers (V1 bis V3) durchgeführt wird,
    - die Abweichung (d2 bis d4) zwischen den zwei Trajektorien (T1, T2) in einem Vergleich von zwei Zeitreihen mittels eines Average Displacement Errors und/oder eines Final Displacement Errors ermittelt wird, wobei ein minimaler Average Displacement Error angibt, wie weit jede berechnete Position der jeweiligen Trajektorie von ihrer wahren Position im Mittel entfernt ist, und ein minimaler Final Displacement Error eine Abweichung einer Vorhersage von einer wahren Trajektorie für den jeweils letzten Vorhersageschritt angibt,
    - eine der zwei Trajektorien (T1, T2) eine erfasste reale Trajektorie (T1) ist, die der eine Verkehrsteilnehmer (V1 bis V3) in einem jeweiligen aufgezeichneten Verkehrsszenario tatsächlich fährt,
    - die verbleibende der zwei Trajektorien (T1, T2) eine simulierte Trajektorie (T2) ist, welche in einer Simulation ermittelt wird und eine Trajektorie (T2) repräsentiert, welche der eine Verkehrsteilnehmer (V1 bis V3) im gleichen Verkehrsszenario fahren würde, wenn der andere Verkehrsteilnehmer (V1 bis V3) nicht vorhanden wäre, wobei in der Simulation ein Modul zur Trajektorienplanung das gleiche Verkehrsszenario erneut abfährt, mit dem Unterschied, dass der andere Verkehrsteilnehmer (V1) fehlt,
    - die Score-Werte als Label in dem trainierten künstlichen neuronalen Netz (N) verwendet werden, um den Einfluss eines Verkehrsteilnehmers (V1 bis V3) auf zumindest einen anderen Verkehrsteilnehmer (V1 bis V3) zu prädizieren,
    - das trainierte künstliche neuronale Netz (N) einen Map-Free-Ansatz verwendet, welcher dynamische Informationen (DI) der anderen Verkehrsteilnehmer (V1 bis V3) als Eingangsinformationen nutzt, und/oder einen Szenengraph verwendet, welcher als Eingangsinformationen statische Informationen (SI), die dynamischen Informationen (DI), semantische Informationen (SEI) und relationale Informationen (RI) in eine Graphenstruktur (GS) überführt, und
    - Ausgangsinformationen (AI) des trainierten künstlichen neuronalen Netzes (N) Auskunft über den Einfluss eines Verkehrsteilnehmers (V1 bis V3) auf zumindest einen weiteren Verkehrsteilnehmer (V1 bis V3) geben.

2.  Verfahren nach Anspruch 1,
    **dadurch gekennzeichnet, dass** aus dem Score-Wert eines
    Verkehrsteilnehmers (V1 bis V3) ein Einfluss des Verkehrsteilnehmers (V1 bis V3) auf genau einen anderen Verkehrsteilnehmer (V1 bis V3) ermittelt wird.

3.  Verfahren nach einem der vorhergehenden Ansprüche,
    **dadurch gekennzeichnet, dass** aus dem Score-Wert eines
    Verkehrsteilnehmers (V1 bis V3) ein Einfluss des Verkehrsteilnehmers (V1 bis V3) auf alle anderen Verkehrsteilnehmer (V1 bis V3) einer jeweiligen Verkehrsszene ermittelt wird.

4.  Verfahren zum Betrieb eines Fahrzeugs, wobei der in einem Verfahren nach einem der vorhergehenden Ansprüche prädizierte Einfluss eines Verkehrsteilnehmers (V1 bis V3) auf zumindest einen anderen Verkehrsteilnehmer (V1 bis V3) zur Ausführung einer Fahrzeugfunktion verwendet wird.

5.  Verfahren nach Anspruch 4, wobei anhand des prädizierten Einflusses eines umliegenden Verkehrsteilnehmers (V1 bis V3) zu einem Ego-Fahrzeug mittels eines Kollisionswarn- und/oder Kollisionsvermeidungssystems des Ego-Fahrzeugs eine Wahrscheinlichkeit eines Eintritts einer Kollision des Ego-Fahrzeugs mit dem umliegenden Verkehrsteilnehmer (V1 bis V3) ermittelt wird.

**6.** Verfahren nach Anspruch 4 oder 5, wobei der prädizierte Einfluss als Heuristik verwendet wird, um einen Suchraum bei einer Pfadfindung eines automatisiert betriebenen Fahrzeugs auf zumindest einen relevanten Verkehrsteilnehmer (V1 bis V3) zu beschränken.

**7.** Verfahren nach einem der Ansprüche 4 bis 6, wobei der prädizierte Einfluss als Eingangsgröße eines Trajektorienprädiktionsansatzes verwendet wird und eine Stärke einer Interaktion zwischen Paaren von Verkehrsteilnehmern (V1 bis V3) modelliert wird.

**Claims**

**1.** Method for predicting an influence of a road user (V1 to V3) on at least one other road user (V1 to V3) by evaluating traffic scenarios by means of a trained artificial neural network (N), wherein

- the training of the neural network (N) is carried out by means of recorded traffic scenarios, wherein the traffic scenarios have several road users (V1 to V3) and are labeled with score values representing an influence of one road user (V1 to V3) by other road users (V1 to V3),
- a calculation of a corresponding score value for a road user (V1 to V3) with respect to another road user (V1 to V3) is carried out based on a determination of a deviation (d2 to d4) between two trajectories (T1, T2) of the one road user (V1 to V3),
- the deviation (d2 to d4) between the two trajectories (T1, T2) is determined in a comparison of two time series by means of an average displacement error and/or a final displacement error, wherein a minimum average displacement error indicates how far each calculated position of the corresponding trajectory is from its true position on average, and a minimum final displacement error indicates a deviation of a prediction from a true trajectory for the corresponding last prediction step,
- one of the two trajectories (T1, T2) is a detected real trajectory (T1) that the one road user (V1 to V3) actually drives in a corresponding recorded traffic scenario,
- the remaining of the two trajectories (T1, T2) is a simulated trajectory (T2), which is determined in a simulation and represents a trajectory (T2) which the one road user (V1 to V3) would travel in the same traffic scenario if the other road user (V1 to V3) were not present, wherein, in the simulation, a trajectory-planning module drives through the same traffic scenario again, with the difference that the other road user (V1) is missing,
- the score values are used as labels in the trained artificial neural network (N) in order to predict the influence of a road user (V1 to V3) on at least one other road user (V1 to V3),
- the trained artificial neural network (N) uses a map-free approach, which uses dynamic information (DI) relating to the other road users (V1 to V3) as input information, and/or uses a scene graph, which converts static information (SI), the dynamic information (DI), semantic information (SEI) and relational information (RI) into a graph structure (GS) as input information, and
- output information (AI) relating to the trained artificial neural network (N) provides information about the influence of a road user (V1 to V3) on at least one other road user (V1 to V3).

**2.** Method according to claim 1,
**characterized in that,** an influence of the road user (V1 to V3) on exactly one other road user (V1 to V3) is determined from the score value of a road user (V1 to V3).

**3.** Method according to any of the preceding claims,
**characterized in that,** an influence of the road user (V1 to V3) on all other road users (V1 to V3) in a corresponding traffic scene is determined from the score value of a road user (V1 to V3).

**4.** Method for operating a vehicle, wherein the influence of a road user (V1 to V3) on at least one other road user (V1 to V3) predicted in a method according to any of the preceding claims is used to execute a vehicle function.

**5.** Method according to claim 4, wherein, on the basis of the predicted influence of a nearby road user (V1 to V3) on an ego vehicle, a probability of an occurrence of a collision of the ego vehicle with the nearby road user (V1 to V3) is determined by means of a collision-warning and/or collision-avoidance system of the ego vehicle.

**6.** Method according to either claim 4 or claim 5, wherein the predicted influence is used as a heuristic to restrict a search space to at least one relevant road user (V1 to V3) during a path finding process of an automated vehicle.

**7.** Method according to any of claims 4 to 6, wherein the predicted influence is used as an input variable of a trajectory prediction approach and a strength of an interaction between pairs of road users (V1 to V3) is modeled.

**Revendications**

**1.** Procédé de prédiction d'une influence d'un usager de la route (V1 à V3) sur au moins un autre usager de la route (V1 à V3) par évaluation de scénarios de trafic par le biais d'un réseau neuronal (N) artificiel entraîné, dans lequel

- l'entraînement du réseau neuronal (N) est réalisé par le biais de scénarios de trafic enregistrés, dans lequel les scénarios de trafic présentent plusieurs usagers de la route (V1 à V3) et sont étiquetés avec des valeurs de score représentant une influence d'un usager de la route (V1 à V3) par d'autres usagers de la route (V1 à V3),
- un calcul d'une valeur de score respective pour un usager de la route (V1 à V3) par rapport à un autre usager de la route (V1 à V3) est réalisé sur la base d'une détermination d'un écart (d2 à d4) entre deux trajectoires (T1, T2) dudit usager de la route (V1 à V3),
- l'écart (d2 à d4) entre les deux trajectoires (T1, T2) est déterminé dans une comparaison de deux séries temporelles par le biais d'une erreur de déplacement moyenne et/ou d'une erreur de déplacement finale, dans lequel une erreur de déplacement moyenne minimale indique de combien chaque position calculée de la trajectoire respective est éloignée en moyenne de sa position réelle, et une erreur de déplacement finale minimale indique un écart d'une prédiction par rapport à une trajectoire réelle pour la dernière étape de prédiction respective,
- l'une des deux trajectoires (T1, T2) est une trajectoire réelle détectée (T1) que ledit usager de la route (V1 à V3) suit effectivement dans un scénario de trafic enregistré respectif,
- la trajectoire restante des deux trajectoires (T1, T2) est une trajectoire simulée (T2) qui est déterminée dans une simulation et qui représente une trajectoire (T2) que ledit usager de la route (V1 à V3) suivrait dans le même scénario de trafic si l'autre usager de la route (V1 à V3) n'était pas présent, dans lequel un module de planification de trajectoire parcourt à nouveau le même scénario de trafic dans la simulation, à la différence que l'autre usager de la route (V1) est absent,
- les valeurs de score sont utilisées comme étiquettes dans le réseau neuronal (N) artificiel entraîné pour prédire l'influence d'un usager de la route (V1 à V3) sur au moins un autre usager de la route (V1 à V3),
- le réseau neuronal (N) artificiel entraîné utilise une approche sans carte, qui utilise des informations dynamiques (DI) des autres usagers de la route (V1 à V3) comme informations d'entrée, et/ou utilise un graphe de scène, qui convertit comme informations d'entrée des informations statiques (SI), les informations dynamiques (DI), des informations sémantiques (SEI) et des informations relationnelles (RI) en une structure de graphe (GS), et
- des informations de sortie (AI) du réseau neuronal (N) artificiel entraîné donnent des informations sur l'influence d'un usager de la route (V1 à V3) sur au moins un autre usager de la route (V1 à V3).

**2.** Procédé selon la revendication 1,
**caractérisé en ce que,** à partir de la valeur de score d'un usager de la route (V1 à V3), une influence de l'usager de la route (V1 à V3) est déterminée sur exactement un autre usager de la route (V1 à V3).

**3.** Procédé selon l'une des revendications précédentes,
**caractérisé en ce que,** à partir de la valeur de score d'un usager de la route (V1 à V3), une influence de l'usager de la route (V1 à V3) est déterminée sur tous les autres usagers de la route (V1 à V3) d'une scène de trafic respective.

**4.** Procédé de fonctionnement d'un véhicule, dans lequel l'influence d'un usager de la route (V1 à V3) sur au moins un autre usager de la route (V1 à V3), influence prédite dans un procédé selon l'une des revendications précédentes, est utilisée pour exécuter une fonction de véhicule.

**5.** Procédé selon la revendication 4, dans lequel, à l'aide de l'influence prédite d'un usager de la route (V1 à V3) environnant par rapport à un ego-véhicule, une probabilité de survenance d'une collision de l'ego-véhicule avec l'usager de la route (V1 à V3) environnant est déterminée par le biais d'un système d'alerte de collision et/ou d'évitement de collision de l'ego-véhicule.

**6.** Procédé selon la revendication 4 ou 5, dans lequel l'influence prédite est utilisée comme heuristique pour restreindre un espace de recherche à au moins un usager de la route (V1 à V3) pertinent lors d'une recherche de trajet d'un véhicule à fonctionnement automatisé.

7. Procédé selon l'une des revendications 4 à 6, dans lequel l'influence prédite est utilisée en tant que grandeur d'entrée d'une approche de prédiction de trajectoire et une intensité d'une interaction entre des paires d'usagers de la route (V1 à V3) est modélisée.

FIG 1

FIG 2

FIG 3

FIG 4

FIG 5

# EP 4 508 621 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102021005625
- DE 102019206908 A1
- EP 3722908 A1
- DE 102019209736 A1